Europäisches Patentamt

European Patent Office

Office européen des brevets

(19)

(11) Veröffentlichungsnummer: **0 043 992**

**A2**

(12) **EUROPÄISCHE PATENTANMELDUNG**

(21) Anmeldenummer: **81105125.9**

(22) Anmeldetag: **02.07.81**

(51) Int. Cl.³: **H 04 N 3/18**
  **H 02 M 3/24**

(30) Priorität: **14.07.80 DE 3026604**

(43) Veröffentlichungstag der Anmeldung:
  **20.01.82 Patentblatt 82/3**

(84) Benannte Vertragsstaaten:
  **AT BE CH DE FR GB IT LI LU NL SE**

(71) Anmelder: **Licentia Patent-Verwaltungs-GmbH**
  **Theodor-Stern-Kai 1**
  **D-6000 Frankfurt/Main 70(DE)**

(72) Erfinder: **Napp, Gerhard, Ing. grad.**
  **Sundernstrasse 34**
  **D-3005 Hemmingen 1(DE)**

(72) Erfinder: **Kreismer, Heinz**
  **Forstgrund 6**
  **D-3000 Hannover 61(DE)**

(74) Vertreter: **Einsel, Robert, Dipl.-Ing.**
  **Theodor-Stern-Kai 1**
  **D-6000 Frankfurt/Main 70(DE)**

(54) Schaltnetzteil für einen Fernsehempfänger.

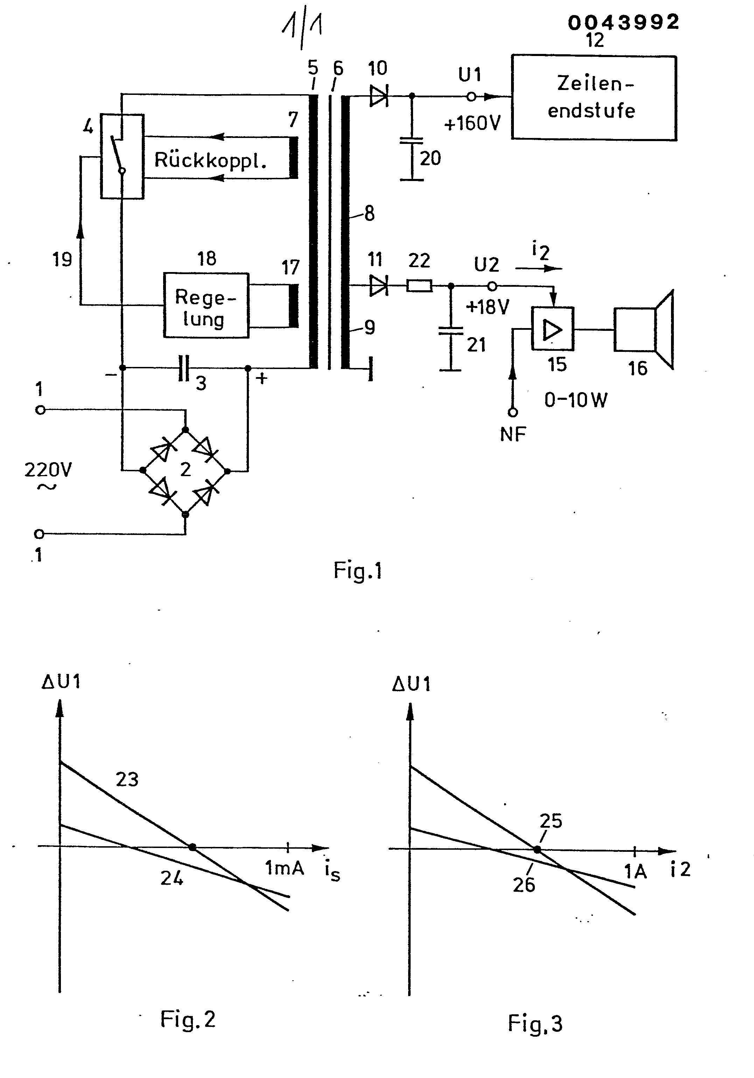

(57) Bein einem Schaltnetzteil für einen Fernsehempfänger hat die starke Änderung des Betriebsstromes ($i_2$) für die Tonsignal-Stufe (15,16) einen störenden Einfluß auf die Größe der Betriebsspannung (U1) für die Zeilenendstufe (12) und damit auf die Bildbreite. Dieser Einfluß wird durch einen Widerstand (22) in Reihe zum Gleichrichter (11) zur Gewinnung der Betriebsspannung (U2) für die Tonsignal-Stufe (15,16) verringert (Fig. 1).

Fig.1

EP 0 043 992 A2

L  i  c  e  n  t  i  a
Patent-Verwaltungs-GmbH
Theodor-Stern-Kai 1
6000  Frankfurt/Main 70

Hannover, den 01.07.1980
UE2-Wp/rs          H 80/45

**Schaltnetzteil für einen Fernsehempfänger**

Bei Fernsehempfängern ist eine galvanische Trennung der
Empfängerschaltung vom Netz erwünscht. Dadurch werden Probleme bei der Isolierung des Antenneneingangs, bei Kopfhörerbuchsen, bei Videobuchsen und bei Tonbanddiodenbuchsen besser
gelöst und außerdem Schutzmaßnahmen gegen Berührung von
Chassisteilen weniger aufwendig.

Eine solche galvanische Trennung läßt sich bekanntlich mit
einem Netztransformator durchführen. Dieser ist aber ein
relativ teures und schweres Bauteil und erzeugt außerdem
störende Magnetfelder.

Zur Vermeidung eines Netztransformators sind sogenannte
Schaltnetzteile bekannt (Funkschau 1975, Heft 5, Seite 40-
43). Bei einem solchen Netzteil werden mit der gleichgerichteten Netzspannung, einem elektronischen Schalter und
einer schwingfähigen Schaltung in der Primärwicklung eines
Trenntransformators Stromimpulse mit einer Frequenz von ca.
30 KHz erzeugt. Diese Stromimpulse erzeugen in der Sekundärwicklung des Transformators Spannungsimpulse, aus denen mit
Gleichrichtern die Betriebsspannungen gewonnen werden. Da
dieser Transformator mit einer wesentlich höheren Frequenz
als der Netzfrequenz arbeitet, sind seine Abmessungen und
sein Gewicht beträchtlich kleiner als die eines Netztransformators.

Ein solches Schaltnetzteil enthält außerdem noch eine Regelschaltung zur Stabilisierung der Amplituden der Ausgangsspannungen. Diese Schaltung erzeugt durch Gleichrichtung
der von einer Zusatzwicklung des Trenntransformators entnommenen Impulse eine Stellgröße. Aus dieser wird durch Vergleich mit einer Bezugsgröße eine Regelspannung gewonnen,
die den Schaltzeitpunkt des genannten Schalters so ändert,
daß die Amplitude der Ausgangsspannungen konstant bleibt.

In der Praxis kommt es vor, daß mit einer Ausgangsgleichspannung des Schaltnetzteils ein Verbraucher mit sich beträchtlich ändernder Stromaufnahme gespeist wird. Diese sich
ändernde Stromaufnahme kann eine unerwünschte Änderung der
Amplitude einer anderen Ausgangsgleichspannung des Schaltnetzteiles bewirken. Bei einem Fernsehempfänger kann z.B.
eine erste Betriebsspannung von +160 V zur Speisung der
Zeilenendstufe und eine zweite Betriebsspannung von +18 V
zur Speisung der Ton-Endstufe dienen. Eine solche Ton-Endstufe hat z.B. je nach eingestellter Lautstärke eine Leistungsaufnahme von 0 bis 10 Watt, so daß sich z.B. die Belastung der zweiten Betriebsspannung zwischen 10 und 20 Watt
ändert. Eine solche Änderung in der Belastung bewirkt bereits
eine Änderung der ersten Betriebsspannung in der Größenordnung um 1 V. Diese Änderung ist zwar relativ gering, kann
jedoch bei der Ablenkung schon zu Ablenkfehlern von mehr
als 1 mm führen.

Es ist zwar denkbar, derartige Änderungen einer Betriebsspannung durch eine erhöhte Regelsteilheit der Regelschaltung auszugleichen. Einer solchen Erhöhung sind aber in der Praxis Grenzen gesetzt. Eine weitere Erhöhung der Regelsteilheit würde einen zu großen zusätzlichen Schaltungsaufwand erfordern.

Es ist auch bekannt (DE-OS 27 49 847), den Einfluß der Änderung der Stromaufnahme der Tonstufe auf die Betriebsspannung für die Zeilenendstufe dadurch zu verringern, daß die Kopplung zwischen der Sekundärwicklung zur Gewinnung der Betriebsspannung für die Tonstufe und der Zusatzwicklung für die zur Stabilisierung dienende Schaltung größer bemessen wird als die Kopplung zwischen der Sekundärwicklung für die Betriebsspannung für die Zeilenendstufe und der genannten Zusatzwicklung. Diese Lösung erfordert aber einen speziellen Aufbau der einzelnen Wicklungen und ist optimal wirksam nur für eine bestimmte Belastung der Betriebsspannung für die Zeilenendstufe. Diese Belastung ist jedoch in der Praxis nicht konstant, sondern vom Strahlstrom abhängig.

Der Erfindung liegt die Aufgabe zugrunde, den beschriebenen Einfluß der sich ändernden Stromaufnahme der Tonstufe auf die Betriebsspannung für die Zeilenendstufe durch eine einfache schaltungstechnische Maßnahme zu verringern.

Diese Aufgabe wird durch die im Anspruch 1 beschriebene Erfindung gelöst. Vorteilhafte Weiterbildungen der Erfindung sind in den Unteransprüchen beschrieben.

Die Wirkungsweise der erfindungsgemäßen Maßnahme, die nur in einem einzigen Widerstand besteht, ist überraschend und ohne weiteres auch nicht erklärlich. Es wurde festgestellt, daß durch den Widerstand der Stromflußwinkel des Ladestromes für den Ladekondensator vergrößert und die Amplitude des Ladestromes verringert wurde. Vermutlich hat diese Änderung über die Kopplung zwischen den einzelnen Wicklungen einen

- 5 -

derartigen Einfluß auf die auf der Primärseite des Schaltnetzteils wirksame, zur Stabilisierung der Ausgangsspannung
dienende Regelschaltung in dem Sinne, daß die genannte Abhängigkeit verringert wird.

Die Erfindung wird anhand der Zeichnung an einem Ausführungsbeispiel erläutert. Darin zeigen
Figur 1 ein Ausführungsbeispiel der Erfindung und
Figur 2,3 Kurven zur Erläuterung der erzielten Vorteile.

In Figur 1 wird die von den Netzklemmen 1 kommende Netzspannung mit dem Gleichrichter 2 in eine am Ladekondensator 3
stehende Gleichspannung umgewandelt. Diese Gleichspannung ist
über den Schalter 4 an die Arbeitswicklung 5 des Trenntrafos
6 des Schaltnetzteils angelegt. Mittels der Rückkopplungswicklung 7 ist die Schaltung derart selbstschwingend ausgebildet, daß der Schalter 4 periodisch mit der Frequenz von
etwa 30 KHz geschlossen und geöffnet wird. Dadurch entstehen
an den Sekundärwicklungen 8,9 Spannungsimpulse, aus denen
mit Gleichrichtern 10,11 eine erste Betriebsspannung $U_1$ von
+ 160 V für die Zeilenendstufe 12 und eine zweite Betriebsspannung $U_2$ von + 18 V für eine Ton-Endstufe 15 gewonnen
werden, die den Lautsprecher 16 speist. Von der Zusatzwicklung 17 wird außerdem die Regelschaltung 18 gespeist. Darin
wird die Amplitude der Impulsspannung an der Wicklung 17 mit
einer Bezugsspannung verglichen und daraus eine Stellgröße
gewonnen. Diese steuert über die Leitung 19 die Einschaltdauer des Schalters 4 und damit den Endwert des sägezahnförmig ansteigenden Stromes durch die Wicklung 5 so, daß
die Amplitude der Impulsspannung an den Sekundärwicklungen
8,9 und damit auch die Amplitude der Betriebsspannungen $U_1$,
$U_2$ stabilisiert werden.

Die Leistungsaufnahme der Endstufe 15 ändert sich je nach
eingestellter Lautstärke zwischen 0 und 10 W, wodurch sich aufgrund weiterer, an U2 angeschlossener Verbraucher die Belastung der Betriebsspannung U2 zwischen 10 und 20 W ändert.
Die dabei an sich auftretende Änderung in der Betriebsspannung U1 wird durch den zusätzlichen Widerstand 22 beträchtlich verringert. Bei einem praktisch erprobten Ausführungsbeispiel hatte der Widerstand 22 einen Wert von 0,47 Ohm.

Figur 2 zeigt die unerwünschte Änderung $\triangle$ U1 der Spannung
U1 bei einer bestimmten Änderung des von der Endstufe 15 aufgenommenen Stromes i2, und zwar in Abhängigkeit vom Strahlstrom $i_s$ in der Bildröhre. Es ist ersichtlich, daß bei einem
bestimmten Strahlstrom die Änderung gleich null ist. Da aber
der Strahlstrom kein fester Wert ist, sondern zwischen 0 und
etwa 1 mA schwankt, treten beachtliche Änderungen in der
Spannung U1 auf. Die Kurve 24 zeigt die Änderungen in der
Spannung U1 unter den gleichen Bedingungen, jedoch mit dem
Widerstand 22. In der Praxis konnte der Betrag der Änderung
in der Spannung U1 etwa um den Faktor 4 verringert werden.

Figur 3 zeigt wiederum die unerwünschte Änderung in der
Spannung U1 bei einer bestimmten Änderung des Stromes i2,
und zwar in Abhängigkeit von den jeweils fließenden Strom i2.
Auch hier ist die auftretende Änderung in der Spannung U1
im Punkt 25, also bei einem bestimmten eingestellten Strom
i2 praktisch gleich null. Da jedoch der Strom i2 sich ebenfalls zwischen sehr kleinen Werten bis etwa 1 A ändert,
treten wiederum beträchtliche Änderungen in der Spannung U1
auf. Die Kurve 26 zeigt die Änderungen unter den gleichen
Voraussetzungen, jedoch mit dem Widerstand 22. Durch den
Widerstand 22 werden also zwei Abhängigkeiten beträchtlich
verringert. Durch den Widerstand 22 wird zwar der Innenwiderstand für die Betriebsspannung U2 etwas vergrößert. Da jedoch der Wert für den Widerstand 22 zur Erzielung der gewünschten Wirkung mit etwa 0,5 bis 1 Ohm relativ klein bemessen
sein kann, ist diese Erhöhung des Innenwiderstandes in der
Praxis nicht nachteilig.

Patentansprüche

1. Schaltnetzteil für einen Fernsehempfänger mit einem Transformator mit einer ersten Sekundärwicklung und einem ersten Gleichrichter zur Erzeugung einer Betriebsspannung für die Zeilenendstufe sowie einer zweiten Sekundärwicklung mit einem zweitem Gleichrichter zur Erzeugung einer zweiten Betriebsspannung für die Ton-Endstufe, dadurch gekennzeichnet, daß zur Verringerung des Einflusses der Stromaufnahme der Ton-Endstufe (15,16) auf die Betriebsspannung (U1) der Zeilenendstufe (12) in Reihe zum zweiten Gleichrichter (11) ein Widerstand (22) liegt.

2. Netzteil nach Anspruch 1, dadurch gekennzeichnet, daß der Wert des Widerstandes (22) in der Größenordnung von 0,5 Ohm liegt.

3. Netzteil nach Anspruch 2, dadurch gekennzeichnet, daß der Wert des Widerstandes (22) etwa 0,47 Ohm beträgt.

Fig.1

Fig.2

Fig.3